# EUROPÄISCHE PATENTSCHRIFT

(11) **EP 0 665 388 B1**
(45) Veröffentlichungstag und Bekanntmachung des Hinweises auf die Patenterteilung: **27.05.1998**
(21) Anmeldenummer: 95101958.7
(22) Anmeldetag: 01.02.1992
(51) Int. Cl.: F16D 65/12, F16D 69/00, F16D 13/64

(54) **Reibbelag od. dgl.**
Friction lining
Garniture de friction

(43) Veröffentlichungstag der Anmeldung: 02.08.1995
(62) Teilanmeldung aus: 92101691.1
(73) Patentinhaber: Raybestos Industrie-Produkte GmbH, D-54497 Morbach (DE)
(72) Erfinder: Müller, Ulrich, D-49740 Haselünne (DE); Schulz, Norbert, D-51709 Marienheide (DE)
(74) Vertreter: Türk, Gille, Hrabal, Leifert

(56) Entgegenhaltungen:
- GB-A- 2 030 242
- US-A- 1 833 414

## Beschreibung

Die Erfindung betrifft einen Reibbelag oder dgl., insbesondere für Kupplungen und Scheibenbremsen, mit einem kreisscheibenförmigen Ringkörper aus Reibmaterial, dessen eine Stirnfläche eine Reibfläche aufweist, und der eine zentrale Öffnung und in seinem Ringkörper über dessen Umfang verteilt Löcher zum Durchstecken von Nieten enthält, wobei der Ringkörper in der der Reibfläche gegenüberliegenden - anderen - Stirnfläche mindestens eine Vertiefung aufweist.

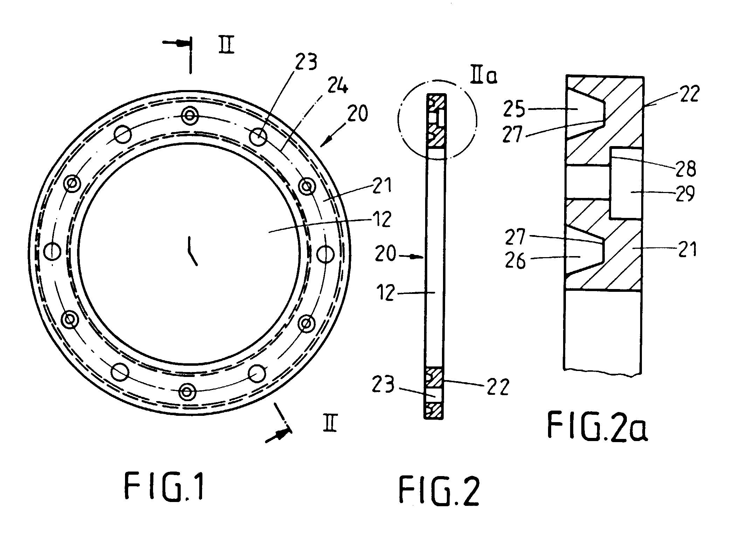

Im Stand der Technik, von dem die Erfindung ausgeht - GB 2 030 242 A -, ist ein kreisscheibenförmiger Reibbelag für Scheibenkupplungen bekannt, der auch als Ringkörper ausgeführt sein kann (Seite 1, Spalte 2, Zeilen 97 bis 98). Der kreisscheibenförmige Reibbelag ist mit Hilfe von Nieten an der einen Seite eines Trägers befestigt. An der anderen Seite des Trägers ist ebenfalls ein kreisscheibenförmiger Reibbelag befestigt (vgl. Fig.1). Auf der der Reibfläche gegenüberliegenden Seite sind jeweils in den Reibbelägen selbst Vertiefungen zur Gewichtsreduzierung und zur Reduzierung des Massenträgheitsmomentes vorgesehen.Als geometrische Formen für die Vertiefungen ("Löcher") werden eine runde, rechteckige oder quadratische Form vorgeschlagen (vgl. Seite 2, Spalte 1, Zeilen 56 bis 60).

Weiterhin sind Reibbeläge bekannt ("Schaltbare Reibkupplungen" von S. Winkelmann und H. Harmuth, Springer-Verlag, 1985, Seite 177 bis 183) bei denen sich die Löcher zum Durchstecken von der Befestigung an Trägerscheiben dienenden Nieten innerhalb der Reibfläche befinden.

Die Ausbildung der im Stand der Technik - von dem die Erfindung ausgeht (GB 2 030 242 A)- bekannten Vertiefungen, ist nicht optimal, da insbesondere die Konstanz des Reibverhaltens nicht optimal gewährleistet ist. Wenn nun ein solcher Reibbelag in Schaltkupplungen von vollsynchronisierten mechanischen Getrieben eingesetzt werden soll, kann dies ganz besonders von Nachteil sein.

Der Lehre der Erfindung liegt daher die Aufgabe zugrunde, einen Reibbelag derart auszugestalten und weiterzubilden, daß die Konstanz des Reibverhaltens verbessert ist.

Die Aufgabe ist nun dadurch gelöst, daß die Vertiefung ringförmig oder als Rille ausgebildet ist. Durch die ringförmige Ausbildung der Vertiefung wird die Konstanz des Reibverhaltens verbessert.

Vorteilhafte Ausgestaltungen der Erfindung sind Gegenstand der Unteransprüche.

Durch die Erfindung wird ein Reibbelag od. dgl. neuer Geometrien geschaffen, bei dem das axiale Massenträgheitsmoment deutlich reduziert ist, weil einmal die Masse des Reibbelages selbst verringert wird und weil zweitens seine Form dabei so gestaltet ist, daß die Reduzierung des Trägheitsmomentes durch die Geometrie des Reibbelages noch Unterstützung erfährt.

Die Verringerung des Massenträgheitsmomentes von Reibbelägen für Kupplungen von mechanischen Schaltgetrieben bewirkt eine Verkürzung der Schaltzeiten, eine Verringerung der Schaltkräfte, eine Schonung der Schaltelemente einschließlich Synchronringe und nicht zuletzt eine Verbesserung des Schaltkomforts. So lassen sich mit dem erfindungsgemäßen Reibbelag die Trägheitsmomente des Reibbelages zwischen 35 und 70 % reduzieren. Wird ein derartiger Reibbelag an einer Kupplungsscheibe eingesetzt, so läßt sich das Trägheitsmoment der so ausgestatteten Kupplungsscheibe zwischen 10 und 35 % reduzieren, wobei die Wirksamkeit der Kupplung sogar noch verbessert wird.

Da gemäß der Erfindung der Ringkörper des Reibbelages in der der Reibfläche gegenüberliegenden Stirnfläche wenigstens eine ringförmige Vertiefung oder Rille enthält, ergibt sich eine deutliche Verringerung des Gewichtes des Reibbelages und damit des Massenträgheitsmomentes desselben, ohne dabei die Reibfläche selbst reduzieren zu müssen. Da die an der Rückseite des Reibbelages vorgesehenen ringförmigen Vertiefungen oder Rillen vorzugsweise nicht tiefer als bis zum Nietlochboden plus Höhe des Nietkopfes ausgebildet sind, wird durch diese Vertiefungen oder Rillen die durch Verschleiß abzutragende Dicke des Reibbelages nicht eingeschränkt.

Durch die Erfindung werden neuartige Konstruktionen für Reibbeläge od. dgl. geschaffen, die insbesondere für Schaltkupplungen von Kraftfahrzeugen bestimmt sind, aber auch bei Vollscheibenbremsen eingesetzt werden können. Aufgrund der Geometrie bzw. der Ausgestaltung dieses Reibbelages wird eine Optimierung des Reibverhaltens erzielt.

In der Zeichnung sind Ausführungsbeispielse von erfindungsgemäßen Reibbelägen schematisch dargestellt, und zwar zeigt
- Fig. 1: eine Draufsicht einer Ausführungsform eines erfindungsgemäßen Reibbelages mit an der Rückseite angeordneten ringförmigen Ausnehmungen oder Rillen,
- Fig. 2: einen Querschnitt des Reibbelages aus Fig. 1 nach Linie II - II,
- Fig. 2a: eine Einzelheit gemäß IIa aus Fig. 2 in vergrößertem Maßstab,
- Fig. 3: eine Draufsicht einer zweiten Ausführungsform eines erfindungsgemäßen Reibbelages, der im Bereich der Reibzone eine von der Rückseite ausgehende ringförmige Ausnehmung oder Rille enthält,
- Fig. 4: einen Querschnitt des Reibbelages aus Fig. 3 nach Linie IV - IV,
- Fig. 5: eine Draufsicht einer weiteren Ausführungsform eines erfindungsgemäßen Reibbelages mit am Außen- und Innenumfang außerhalb der Reibzone in wellenförmigen Ansätzen angebrachten Bohrungen, die zum Vernieten dienen, und
- Fig. 6: einen Querschnitt des Reibbelages aus Fig. 5 nach Linie VI - VI.

Der in Fig. 1 und 2 dargestellte, für eine Fahrzeugkupplung bestimmte Reibbelag 20 hat einen scheibenförmigen Ringkörper 21, der aus Reibmaterial mit und ohne eingearbeitetem Verstärkungsmaterial einstückig geformt, beispielseise gepreßt, ist.

Bei dieser Ausführungsform hat der Ringkörper 21 eine gleichförmige Dicke, wobei seine Vorderseite oder vordere Stirnseite als Reibfläche 22 ausgebildet ist. Bei dieser Ausführungsform sind zum Durchstecken von Nieten bestimmte Löcher 23 innerhalb der Reibfläche auf einem Kreis 24 in Umfangsrichtung gleichförmig verteilt angeordnet.

Wie insbesondere Fig. 2a zeigt, sind an der Rückseite des Ringkörpers 21 innerhalb und außerhalb der auf dem Kreis 24 angeordneten Löcher 23 ring- oder kreisförmige Vertiefungen 25 und 26 vorgesehen, die beim dargestellten Ausführungsbeispiel einen trapezförmigen Querschnitt aufweisen. Der Boden 27 jeder Vertiefung 25 und 26 liegt etwa in Höhe des Bodens 28 der Ansenkungen 29, die zur Aufnahme des Kopfes eines nicht dargestellten Nietes dienen. Somit können bei Abnutzung des Reibbelages 20 die an dessen Rückseite vorgesehenen Vertiefungen 25 und 26 nicht freigelegt werden, bevor der Reibbelag ausgewechselt werden muß, weil er bis auf die Köpfe der ihn haltenden Niete abgenutzt ist.

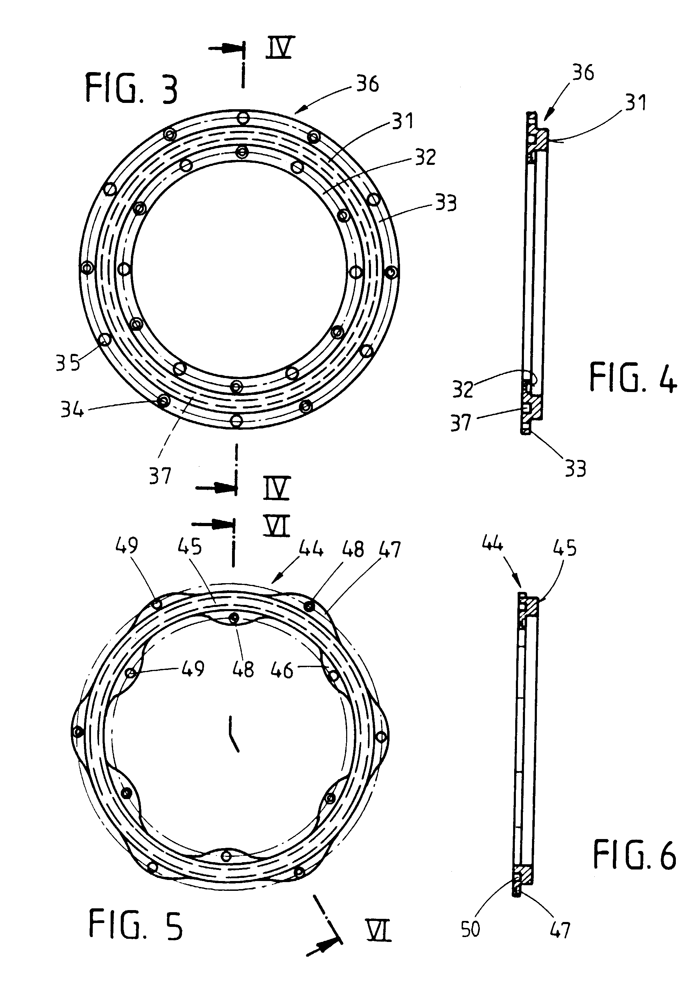

Die Reibbeläge können auch für zweireihige Vernietung ausgeführt sein. Beispiele hierfür zeigen die Figuren 3 bis 6.

Der in Fig. 3 und 4 dargestellte Reibbelag 36 enthält im Bereich der Reibzone hinter der Reibfläche 31 eine ringförmig umlaufende Ausnehmung 37, deren Tiefe etwa der Dicke von mit der Rückseite des Reibbelages 36 bündig abschließenden ringförmigen Ansätzen 32 und 33 entspricht.

Der in Fig. 5 und 6 gezeigte Reibbelag 44 hat wiederum eine die Reibzone bildende ringförmige Reibfläche 45, an der radial nach innen und nach außen vorstehende, im Grundriß wellenförmig ausgebildete Zungen 46 und 47 angeordnet sind. Diese Zungen 46 und 47 sind, wie Fig. 5 zeigt, umfangsmäßig gegeneinander versetzt angeordnet und enthalten jeweils ein Loch 48 bzw. 49, wobei die Löcher 48 mit einer Ansenkung zur Aufnahme eines Nietkopfes versehen sind, während die Löcher 49 einen durchgehend gleichen Querschnitt aufweisen und zum Durchstecken des Schaftes eines Nietes von der entgegengesetzten Seite bestimmt sind.

Die Zungen 46 und 47 verlaufen bündig bzw. fluchtend mit der Rückseite des Reibbelages 44 und haben eine geringere Dicke als der Reibbelag 44 im Bereich der Reibfläche 45.

Von der Rückseite ist in den Reibbelag 44 eine umlaufende kreisringförmige Vertiefung 50 bzw. Rille eingeformt, deren Tiefe etwa der Dicke der Zungen 46, 47 entspricht. Der Reibbelag 44 kann daher bis dicht über die Zungen 46 und 47 abgenutzt werden, ohne daß die Vertiefung 50 freigelegt wird, wodurch die Größe der Reibfläche 45 beeinträchtigt würde.

## Patentansprüche

1. Reibbelag oder dgl., insbesondere für Kupplungen und Scheibenbremsen, mit einem kreisscheibenförmigen Ringkörper (2) aus Reibmaterial, dessen eine Stirnfläche eine Reibfläche(22) aufweist, und der eine zentrale Öffnung (12) und in seinem Ringkörper über dessen Umfang verteilt Löcher (23) zum Durchstecken von Nieten enthält, wobei der Ringkörper in der der Reibfläche (22) gegenüberliegenden anderen - Stirnfläche mindestens eine Vertiefung (25,26; 37; 50) aufweist, **dadurch gekennzeichnet,** daß die Vertiefung (25, 26; 37; 50) ringförmig oder als Rille ausgebildet ist.

2. Reibbelag nach Anspruch 1, dadurch gekennzeichnet, daß die ringförmigen Vertiefungen (25, 26) einen trapezförmigen Querschnitt aufweisen.

3. Reibbelag nach Anspruch 1 oder 2, dadurch gekennzeichnet, daß die ringförmigen Vertiefungen (25, 26) mit ihrem Boden (27) bis in die Tiefe des Bodens (28) der Löcher (23) zum Durchstecken von Nieten reichen.

4. Reibbelag nach einem der Ansprüche 1 bis 3, dadurch gekennzeichnet, daß die ringförmigen Vertiefungen (25, 26; 27; 50) oder Rillen radial inner- und/oder außerhalb der auf einem Kreis (24) angeordneten Löcher (23) zum Durchstecken von Nieten vorgesehen sind.

## Claims

1. Friction lining or the like, in particular for clutches and disc brakes, with a disc-shaped annular body (2) of friction material, of which one face has a friction surface (22), and which has a central opening (12) and contains in its annular body circumferentially distributed holes (23) for the passage of rivets, the annular body having at least one recess (25, 26; 37; 50) in the - other - face lying opposite the friction surface (22), **characterised in that** the recess (25, 26; 37; 50) is made ring-shaped or as a channel.

2. Friction lining according to Claim 1, characterised in that the ring-shaped recesses (25, 26) have a trapezoidal cross-section.

3. Friction lining according to Claim 1 or 2, characterised in that the ring-shaped recesses (25, 26) have their bottom (27) extending as far as into the depth of the bottom (28) of the holes (23) for the passage of rivets.

4. Friction lining according to one of Claims 1 to 3, characterised in that the ring-shaped recesses (25, 26; 27; 50) or channels are provided radially inside and/or outside the holes (23) arranged on a circle (24) for the passage of rivets.

## Revendications

1. Garniture de friction ou analogue, notamment pour des embrayages ou des freins à disques, comportant un corps annulaire (2) en forme de disque circulaire, constitué d'un matériau de friction, dont une surface frontale comporte une surface de friction (22) et qui est pourvu d'une ouverture centrale (12) et de trous (23) qui servent à recevoir des rivets et sont répartis sur le pourtour du corps annulaire, le corps annulaire comportant au moins un creux (25, 26 ; 37 ; 50) dans l'autre surface frontale, opposée à la surface de friction (22), **caractérisée** en ce que le creux (25, 26 ; 37 ; 50) est réalisé de forme annulaire ou sous la forme d'une gorge.

2. Garniture de friction selon la revendication 1, **caractérisée** en ce que les creux annulaires (25, 26) ont une section de forme trapézoïdale.

3. Garniture de friction selon la revendication 1 ou 2, **caractérisée** en ce que les creux annulaires (25, 26) s'étendent par leur fond (27) jusqu'à la profondeur de la base (28) des trous (23) de réception de rivets.

4. Garniture de friction selon l'une des revendications 1 à 3, **caractérisée** en ce que les gorges ou creux annulaires (25, 26 ; 37; 50) sont situés radialement à l'intérieur et/ou à l'extérieur des trous (23), répartis sur un cercle (24), qui sont destinés à recevoir des rivets.
